Europäisches Patentamt

European Patent Office

Office européen des brevets

(19)

(11) Veröffentlichungsnummer: **0 217 396**
**B1**

(12) **EUROPÄISCHE PATENTSCHRIFT**

(45) Veröffentlichungstag der Patentschrift:
27.09.89

(21) Anmeldenummer: **86113611.7**

(22) Anmeldetag: **02.10.86**

(51) Int. Cl.⁴: **F16L 59/02**

(54) Dämmplatte aus Mineralfasern.

(30) Priorität: **04.10.85 DE 3535490**

(43) Veröffentlichungstag der Anmeldung:
**08.04.87 Patentblatt 87/15**

(45) Bekanntmachung des Hinweises auf die Patenterteilung:
**27.09.89 Patentblatt 89/39**

(84) Benannte Vertragsstaaten:
**AT BE CH DE ES FR GB GR IT LI LU NL SE**

(56) Entgegenhaltungen:
**DE-A- 3 203 622**

(73) Patentinhaber: **Deutsche Rockwool Mineralwoll-GmbH,
Bottroper Strasse 241, D-4390 Gladbeck(DE)**

(72) Erfinder: **Klose, Gerd Rüdiger, Dr. Ing., Lembecker
Strasse 76, D-4270 Dorsten 19(DE)**
Erfinder: **Feldmann, Marita, Dipl.-Ing., Hornstrasse 28,
D-4390 Gladbeck(DE)**

(74) Vertreter: **Köhne, Friedrich, Dipl.-Ing.,
Postfach 250265 Lothringer Strasse 81,
D-5000 Köln 1(DE)**

## Beschreibung

Die Erfindung bezieht sich auf eine Dämmplatte, bestehend aus Mineralfasern, welche an den Kreuzungs- und Berührungsstellen mittels eines ausgehärteten Bindemittels zu einem Faserverband verbunden sind, wobei Teilbereiche derart mechanisch bearbeitet sind, daß der Faserverband mindestens teilweise aufgelöst ist.

Dämmplatten aus Mineralfasern sind aufgrund ihrer Struktur, d.h. aufgrund ihrer Rohdichte, ihrer Faserorientierung und ihres Bindemittelgehaltes in aller Regel nur begrenzt flexibel. Dämmfilze aus Mineralfasern sind dagegen von Natur aus flexibel, weisen aber gleichzeitig nur eine geringe Druckfestigkeit auf. Zur Erhöhung der schalldämmenden Eigenschaften, aus Gründen der Formstabilität sowie des Brandschutzes und zum leichteren Einbau als Führungselement zwischen zwei ineinander gestellte Zylinder, wie es z.B. bei dreischaligen Schornsteinen der Fall ist, sind in sich festere, aber sich dennoch der Oberfläche der zylindrischen Körper anpassende Faserdämmstoffe erforderlich.

Somit ergeben sich gerade bei der Wärmedämmung von Körpern mit gebogener Oberfläche, vor allem bei Rohrleitungen für die verschiedensten Anwendungsgebiete, bei Fernheizrohren mit Doppelmantel, bei dreischaligen Hausschornsteinen und bei Behältern, um nur einige zu nennen, erhebliche Schwierigkeiten.

Es sind bereits Lösungen bekannt, die darin bestehen, daß die z.B. auf ein Rohr aufzubringende Dämmschicht in eine Vielzahl von Segmenten aufgeteilt wird, und zwar haben diese Dämmstoff-Elemente einen trapezförmigen Querschnitt. Die Elemente können auf flexible Träger aufgeklebt werden und sind somit roll- oder zusammenlegbar. Mehrere derartiger Elemente können dann ein Kreissegment bilden. Das Aufteilen der Dämmschicht in eine Vielzahl von Elementen ist mit einem erheblichen Arbeitsaufwand verbunden. Das gilt auch für das Aufkleben auf einen flexiblen Träger. Außerdem fallen erhebliche Mengen an Staub und meist auch an Abfall auf. Da die Elemente nur wenig zusammendrückbar sind, sind die trapezförmigen Querschnitte genau entsprechend dem Durchmesser z.B. des betreffenden Rohres anzupassen, wenn man nicht Lücken zwischen den Elementen und damit Wärmebrücken in Kauf nehmen will.

Weiterhin ist bekannt, Faser-Dämmstoff-Platten in einzelne Lamellen aufzuschneiden und diese auf einen flexiblen Träger aufzukleben. Nachteilig dabei ist, daß die überwiegend horizontal orientierten Fasern eine hohe Quer-Druckfestigkeit haben und deshalb beim Umlegen um einen zylindrischen Körper einen hohen Gegendruck entwickeln. Dadurch kann unter Umständen die Zugfestigkeit des flexiblen Trägers überschritten werden oder es kommt zu Ablösungen der Lamellen von dem Träger.

Bei Dämmplatten aus Lamellen, in denen die Fasern nicht parallel zu den großen Plattenseiten verlaufen, sondern bei denen die Lamellen um 90° gedreht und auf einen flexiblen Träger aufgeklebt sind, ergibt sich zwar in Abhängigkeit von der Rohdichte und der Struktur der Lamellen eine verhältnismäßig große Flexibilität der Dämmplatte insgesamt und eine verhältnismäßig große Druckfestigkeit in radialer Richtung. Auf dem Transport und bei der praktischen Verarbeitung sind diese Dämmplatten aber sehr empfindlich, d.h. beim Biegen platzen diese Platten leicht auf oder brechen an unbestimmten Stellen auseinander, dies um so mehr, je kleiner der Durchmesser des zu dämmenden Rohres ist.

Weiterhin ist bekannt, in Dämmplatten rechteckige oder trapezförmige parallel zueinander verlaufende Schnitte bzw. Aussparungen vorzusehen, so daß an diesen Stellen die Dicke der Dämmplatte wesentlich verringert wird. Dadurch ist die Dämmplatte an diesen streifenförmigen Stellen bis zu einem gewissen Grade polygonal knickbar. Nachteilig ist auch hier der Herstellungsaufwand, der Staubanfall und der Materialverlust durch Abfall. Wenn eine solche Dämmplatte z.B. auf einem Rohr aufgebracht ist, sind die Aussparungen zumeist nicht vollständig geschlossen, so daß sich wiederum Wärmebrücken ergeben. Außerdem brechen die meist dünnen Stege wegen der starren Struktur des Ausgangsmaterials während des Transportes oder bei der Verarbeitung häufig durch, so daß der Zusammenhang verlorengeht und letztlich die Effektivität der Dämmung deutlich sinkt.

Eine zu Anfang erläuterte Dämmplatte ist schließlich aus der DE-OS 3 203 622 bekannt.

Diese Dämmplatten sich jedoch nur zur Anbringung zwischen Bauwerksträgern, insbesondere jeweils zwischen zwei Dachsparren, bestimmt und auch nur anwendbar. Es geht hier darum, die Dämmplatte in bezug auf ihre Breite in einem gewissen Maße leicht zusammendrückbar zu machen. Zu diesem Zweck werden entweder die beiden einander gegenüberliegenden Randbereiche in der gesamten Höhe der Dämmplatte mechanisch derart bearbeitet, daß der Faserverband mindestens teilweise aufgelöst wird oder es werden von beiden Plattenseiten her irgendwelche mittlere Bereiche der Dämmplatte in dieser Weise mechanisch, z.B. durch Walken bearbeitet. Für ein Anbringen an Körpern mit gebogener Fläche, wie z.B. an Rohren, sind diese Dämmplatten ungeeignet, weil beim Biegen große polygonale starre, d.h. praktisch nicht biegsame Plattenteile verbleiben und sich das Fasermaterial in den mechanisch bearbeiteten Bereichen nach außen auswölben würde.

Dem gegenüber liegt der Erfindung die Aufgabe zugrunde, eine Dämmplatte zu schaffen, die an Köpern mit gebogener Fläche angebracht werden kann, die ferner einen geringen Arbeitsaufwand erfordert und ein Staubanfall sowie Materialverlust vermieden wird.

Die gestellte Aufgabe wird erfindungsgemäß dadurch gelöst, daß zwecks Anbringung an Körpern mit gebogener Fläche, wie Rohren, die mechanisch bearbeiteten Teilbereiche ausgehend von nur einer Plattenseite in Abhängigkeit vom Krümmungsradius der gebogenen Fläche bis in eine solche Tiefe der Plattendicke und mit solchen Abständen voneinander vorgesehen sind, daß eine gelenkige Biegsamkeit gegeben ist.

Vorteilhafte Ausgestaltungen dieser Dämmplatte ergeben sich aus den Ansprüchen 2 bis 12.

In der Zeichnung sind Ausführungsbeispiele der erfindungsgemäßen Dämmplatte im Schema dargestellt, und zwar zeigen:

Fig. 1 eine Ansicht auf die Stirnseite eines Teiles einer Dämmplatte, bei der die Fasern im wesentlichen parallel zu den Plattenoberflächen bzw. den beiden Plattenseiten orientiert sind, mit Darstellung von mechanisch bearbeiteten Bereichen mit etwa rechteckigem Querschnitt,

Fig. 2 eine Stirnansicht entsprechend Fig. 1, wobei jedoch die Fasern wellenförmig orientiert sind und die mechanisch bearbeiteten Bereiche im Querschnitt trapezförmig sind,

Fig. 3 eine Stirnansicht entsprechend Fig. 1, wobei die Fasern unter einem Winkel zu den Plattenseiten verlaufen und die mechanisch bearbeiteten Bereiche einen im wesentlichen rechteckigen Querschnitt aufweisen,

Fig. 4 eine Stirnansicht entsprechend Fig. 3, wobei die mechanisch bearbeiteten Bereiche ebenfalls unter einem Winkel zu einer Plattenseite eingearbeitet sind,

Fig. 5 eine Stirnansicht entsprechend Fig. 1, wobei die mechanisch bearbeiteten Bereiche einen trapezförmigen Querschnitt aufweisen,

Fig. 6 eine Stirnansicht entsprechend Fig. 3, wobei die mechanisch bearbeiteten Bereiche einen trapezförmigen Querschnitt aufweisen und

Fig. 7 einen Horizontalschnitt durch einen dreischaligen Schornstein, wobei eine erfindungsgemäße Dämmplatte als Mittelschale eingefügt ist.

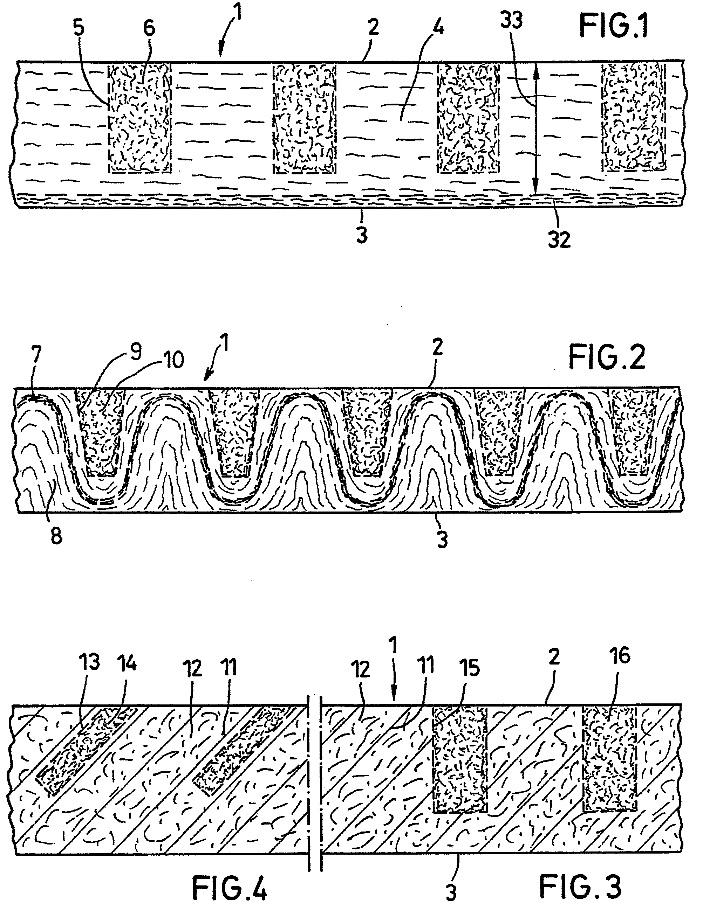

Fig. 1 zeigt ein Ausführungsbeispiel einer erfindungsgemäßen Dämmplatte 1 im Ausschnitt, d.h. die Dämmplatte ist in der Praxis nach links und rechts soweit verlängert, daß ihre Länge dem jeweiligen Anwendungsfall, z.B. dem Umfang eines zu dämmenden Rohres entspricht. Die Breite der Dämmplatte senkrecht zur Bildebene hat die üblichen Maße. Mit dem Bezugszeichen 2 ist die eine Plattenseite, im Bild die obere Plattenseite, und mit dem Bezugszeichen 3 die andere untere Plattenseite bezeichnet. Wie mit dem Bezugszeichen 4 angedeutet ist, ist der Faserverlauf der Mineralfasern im wesentlichen parallel zu den Plattenseiten. Ausgehend von der einen Plattenseite im vorliegenden Beispiel von der oberen Plattenseite 2, sind mechanisch bearbeitete Teilbereiche 5 vorgesehen. Das mechanische Bearbeiten, bevorzugt ein mechanisches Walken dieser Teilbereiche 5 erfolgt in der Weise, daß der Faserverband 6 mindestens teilweise aufgelöst ist. Dadurch verlieren diese Teilbereiche nahezu ihre Druckfestigkeit, so daß sie sich leicht zusammendrücken lassen. Die verschiedenen Vorrichtungen und Werkzeuge zum mechanischen Bearbeiten dieser Teilbereiche sind in der DE-OS 32 03 622 ausführlich beschrieben. Sie können auch hier sinngemäß angewendet werden, allerdings mit dem Unterschied, daß die mechanisch bearbeiteten Teilbereiche nur von einer Plattenseite ausgehend vorgesehen sind. Die Tiefe der mechanisch bearbeiteten Teilbereiche und deren Abstände voneinander sind in Abhängigkeit vom Krümmungsradius der gebogenen Flächen des zu dämmenden Körpers gewählt. Je kleiner der Durchmesser z.B. des zu dämmenden Rohres ist, um so tiefer sind die Teilbereiche zu wählen. Auch die Abstände der Teilbereiche voneinander sind in diesem Falle geringer, als bei Rohren mit großen Durchmesser. Da die Mineralfasern in den Teilbereichen wie gesagt leicht zusammendrückbar sind, kann man die Dämmplatte mit geringem Kraftaufwand biegen, wobei die nicht behandelten Bereiche zwischen dem inneren Ende jedes Teilbereiches und der anderen Plattenseite 3 wie Gelenke wirken.

Zur Verschalung zylindrischer Körper, beispielsweise Rohrleitungen oder Schornsteinen, verlaufen die mechanisch bearbeiteten Teilbereiche parallel zur Zylinderachse, gemäß Fig. 1 von der einen Seitenkante senkrecht zur Bildebene bis zur anderen Seitenkante der Dämmplatte. Ausgehend von der Lage nach Fig. 1 werden die beiden Enden der Dämmplatte nach oben hin gebogen, so daß die obere Plattenseite 2, von der die mechanisch bearbeiteten Teilbereiche ausgehen, an der Oberfläche des betreffenden Rohres anliegt. Beim Ausführungsbeispiel nach Fig. 1 weisen die Teilbereiche bei Wahl eines entsprechenden geeigneten Werkzeuges im wesentlichen einen rechteckigen Querschnitt auf.

Fig. 1 zeigt noch eine vorteilhafte Ausgestaltung, die darin besteht, daß mindestens eine Primärvliesschicht 32 mit einer dichten Bindung der Mineralfasern und mindestens eine Sekundärvliesschicht 33 mit einer lokkeren Bindung der Mineralfasern vorgesehen sind. Die Primärvliesschicht 32 befindet sich nach der einen unteren Plattenseite 3 zu und die Sekundärvliesschicht 33 nach der anderen Plattenseite 2 zu. Dabei sind die mechanisch bearbeiteten Teilbereiche 5 in der Sekundärvliesschicht 33 vorhanden.

Die obigen grundsätzlichen Erläuterungen zu der Dämmplatte 1 nach Fig. 1 gelten sinngemäß auch für die nachfolgend erläuterten Ausführungsbeispiele.

Fig. 2 zeigt ein Ausführungsbeispiel einer Dämmplatte, bei der für die gleichen Teile die gleichen Bezugszeichen wie in Fig. 1 verwendet sind. Die Mineralfasern 7, 8 verlaufen hier jedoch möglichst wellenförmig zwischen den beiden Plattenseiten 2 und 3. Dabei sind die mechanisch bearbeiteten Teilbereiche 9 in mindestens einigen der Wellentäler vorgesehen, im Ausführungsbeispiel nach Fig. 2 in sämtlichen oberen Wellentälern. Wieviele Teilbereiche über die Plattenlänge vorgesehen werden, hängt wiederum von der Krümmung des zu dämmenden Körpers ab. Die mechanisch bearbeiteten Teilbereiche 9 mit dem aufgelösten Faserverband 10 haben in diesem Falle vorteilhafterweise trapezförmigen Querschnitt. Besonders vorteilhafte Biegungseigenschaften und eine große Druckfestigkeit in Richtung senkrecht zu den Plattenseiten 2 und 3 ergeben sich, wenn eine wellenförmige Vliesschicht 7 mit einer dichten Bindung der Mineralfasern in den übrigen Mineralfasern 8 eingebettet ist, wobei auch die letzteren Mineralfasern 8 möglichst Wellenform erhalten sollen.

Fig. 3 zeigt ein weiteres Ausführungsbeispiel einer erfindungsgemäßen Dämmplatte, wobei die Mineralfasern 11 und 12 im wesentlichen unter einem Winkel von weniger als etwa 45° zu den Plattenseiten 2 und 3 verlaufen. Durch eine solche gezielte Orientierung der Fasern können die mechanischen Eigenschaften, vor allem die Flexibilität der ursprünglichen Faserdämmplatte von vornherein gesteuert werden. Die mechanisch bearbeiteten Bereiche 15 mit dem aufgelösten Faserverband 16 haben in diesem Falle wieder im wesentlichen rechteckigen Querschnitt. Die schrägverlaufenden Mineralfasern sind gemäß Fig. 3 ineinander abwechselnden ersten und zweiten Laminatschichten geordnet. Die ersten Laminatschichten 11 weisen eine dichte Bindung der Mineralfasern und die zweiten Laminatschichten 12 eine lockere Bindung der Mineralfasern auf. Die Dicke der zweiten Laminatschichten 12 beträgt vorteilhaft ein Mehrfaches der Dicke der ersten Laminatschichten 11. Auf diese Weise ergibt sich eine besondere Wirkung, die darin besteht, daß die Grenzflächen zwischen den Laminatschichten ähnlich wie Gleitflächen zwischen tektonisch beanspruchten und damit verschiebbaren Gesteinsschichten wirken. Ohne daß die Gefahr besteht, daß die Dämmplatte beim Biegen aufreißt oder bricht, wird auf diese Weise die Flexibilität noch erhöht. Gleichzeitig ergibt sich eine recht hohe Druckfestigkeit der Dämmplatte sowohl in Richtung auf die Plattenseiten 2 und 3 als auch in Längsrichtung der Dämmplatte, also im aufgebrachten Zustand auf dem Umfang der Verschalung.

Das Ausführungsbeispiel gemäß Fig. 4 entspricht im wesentlichen demjenigen nach Fig. 3, jedoch sind hier die mechanisch bearbeiteten Bereiche 13 mit dem aufgelösten Faserverband 14 im Querschnitt etwa trapezförmig unter einem Winkel schräg in die Laminatschichten 12 mit einer lockeren Bindung der Mineralfasern eingearbeitet.

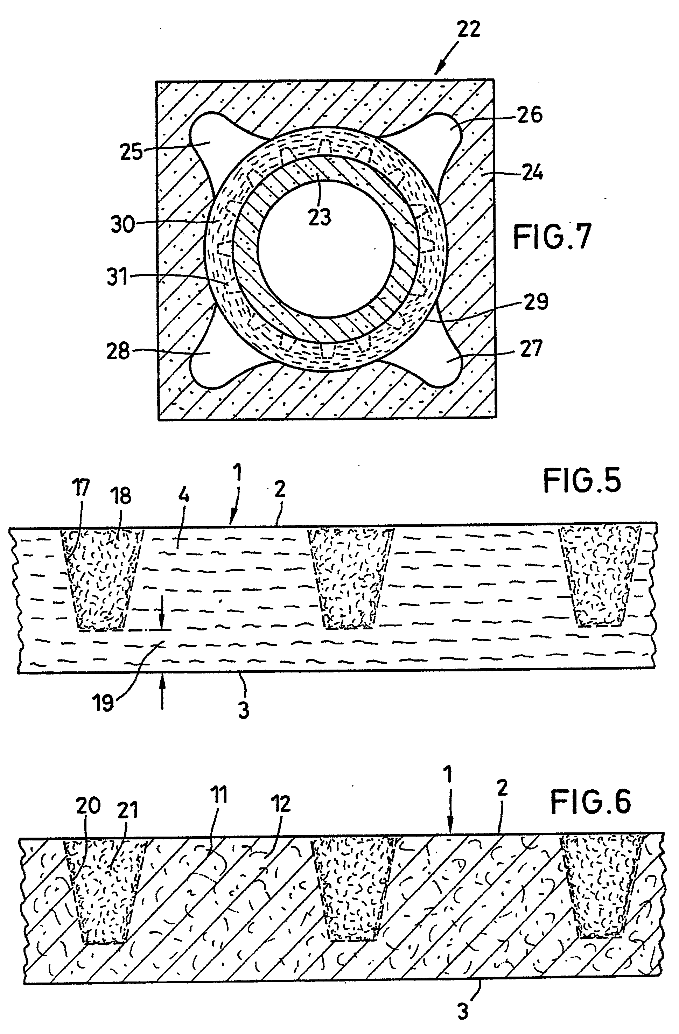

Fig. 5 zeigt ein weiteres Ausführungsbeispiel, welches im wesentlichen demjenigen nach Fig. 1 entspricht, jedoch sind hier die mechanisch bearbeiteten Bereiche 17 mit dem aufgelösten Faserverband 18 im Querschnitt trapezförmig ausgebildet. Der Faserbereich 19 zwischen dem inneren Ende des Teilbereiches 17 und der unteren Plattenseite 3 wirkt beim Biegen der Dämmplatte wieder jeweils als Gelenk.

Das Ausführungsbeispiel nach Fig. 6 entspricht im wesentlichen demjenigen nach Fig. 3. Auch hier sind, entsprechend Fig. 5, die mechanisch bearbeiteten Bereiche 20 mit dem aufgelösten Faserverband 21 im Querschnitt trapezförmig gewählt.

Fig. 7 zeigt im Querschnitt ein besonders bevorzugtes Anwendungsgebiet für die erfindungsgemäßen Dämmplatten, nämlich einen dreischaligen Schornstein 22, insbesondere einen Hausschornstein mit einem an sich bekannten hitzebeständigen Innenrohr 23 bzw. Innenschale. Der Schornstein besitzt ferner eine Außenschale 24 mit äußerer rechteckiger Kontur, in den gemäß diesem Ausführungsbeispiel vier Lüftungskanäle 25, 26, 27 und 28 eingearbeitet sind, die senkrecht zur Bildebene der Fig. 7 verlaufen. Zwischen diesen beiden Schalten ist eine Mittelschale 30 aus erfindungsgemäßen Dämmplatten eingefügt. Je nach Größe des Schornsteines und den örtlichen Gegebenheiten kann die Mittelschale aus einstückigen oder in mehrere Segmente auf dem Umfang aufgeteilten Dämmplatten bestehen. Die mechanisch bearbeiteten Bereiche 31 befinden sich auf der Innenseite, liegen also an der Außenfläche des Innenrohres 23 an. Ein besonderer Vorteil der erfindungsgemäßen Dämmplatten besteht bei diesem Anwendungsgebiet darin, daß sich die Teile 29 der Dämmplatte, die sich an den Lüftungskanälen 25 bis 28 befinden, nicht nach außen hin auswölben, sondern auch hier ihre zylindrische Gestalt behalten.

Gemäß einer weiteren Ausgestaltung können die oben erläuterten erfindungsgemäßen Dämmplatten mit einem flexiblen Träger, insbesondere mit einer Aluminium- oder Kunststoffolie versehen sein, und zwar wird der Träger zweckmäßigerweise auf der nicht mechanisch bearbeiteten Plattenseite 3 aufgeklebt.

Bei den oben erläuterten Ausführungsbeispielen der Dämmplatten verlaufen die mechanisch bearbeiteten Bereiche von der einen Plattenlängskante bis hin zu der gegenüberliegenden anderen Plattenlängskante. Statt dessen können die Teilbereiche aber auch über der Plattenbreite unterbrochen und zueinander etwa auf Lücke versetzt sein. Wenn die Dämmplatte auf einem zylindrischen Körper angebracht werden soll, verlaufen diese unterbrochenen Teilbereiche in axialer Richtung des zylindrischen Körpers. Wenn man die Plattenlänge übereinstimmend mit der Richtung der Länge bzw. Achse des zylindrischen Körpers definiert und dann die Plattenbreite den Umfang ergibt, so erstrecken sich die unter brochenen Teilbereiche in Plattenlänge und sie sind dann auf dem Umfang abwechselnd auf Lücke versetzt.

## Patentansprüche

1. Dämmplatte, bestehend aus Mineralfasern, welche an den Kreuzungs- und Berührungsstellen mittels eines ausgehärteten Bindemittels zu einem Faserverband (6) verbunden sind, wobei Teilbereiche (5, 9, 13, 15, 17, 20, 31) derart mechanisch bearbeitet sind, daß der Faserverbund mindestens teilweise aufgelöst ist, dadurch gekennzeichnet, daß zwecks Anbringung an Körpern (23) mit gebogener Fläche, wie Rohren, die mechanisch bearbeiteten Teilbereiche (5, 9, 13, 15, 17, 20, 31) ausgehend von nur einer Plattenseite (2) in Abhängigkeit vom Krümmungsradius der gebogenen Fläche bis in eine solche Tiefe der Plattendicke und mit solchen Abständen voneinander vorgesehen sind, daß eine gelenkige Biegsamkeit gegeben ist.

2. Dämmplatte nach Anspruch 1, dadurch gekennzeichnet, daß die mechanisch bearbeiteten Teilbereiche (31) zwecks Verschalung zylindrischer Körper (23) parallel zu deren Zylinderachse verlaufen und auf der nach dem Körper (23) zu liegenden Plattenseite vorgesehen sind.

3. Dämmplatte nach Anspruch 2, dadurch gekennzeichnet, daß die Teilbereiche, in axialer Richtung gesehen, sich über einen Teil der Plattenlänge erstrecken und zueinander auf dem Umfang etwa auf Lücke versetzt sind.

4. Dämmplatte nach einem der Ansprüche 1 bis 3, dadurch gekennzeichnet, daß die Teilbereiche rechteckigen (5, 15) oder nach außen verbreiterten trapezförmigen (9, 13, 17, 20) Querschnitt aufweisen.

5. Dämmplatte nach einem der Ansprüche 1 bis 4, dadurch gekennzeichnet, daß auf der nicht mechanisch bearbeiteten Plattenseite (3) ein flexibler Träger, insbesondere eine Aluminium- oder Kunststofffolie aufgeklebt ist.

6. Dämmplatte nach einem der Ansprüche 1 bis 5, dadurch gekennzeichnet, daß mindestens eine Primärvliesschicht (32) mit einer dichten Bindung der Mineralfasern und mindestens eine Sekundärvliesschicht (33) mit einer lockeren Bindung der Mineralfasern vorgesehen sind, und daß die mechanisch bearbeiteten Teilbereiche (5) in der Sekundärvliesschicht (33) vorgesehen sind.

7. Dämmplatte nach Anspruch 6, dadurch gekennzeichnet, daß die Primärvliesschicht (32) nach der einen Plattenseite (3) zu und die Sekundärvliesschicht (33) nach der anderen Plattenseite (2) zu vorgesehen sind.

8. Dämmplatte nach einem der Ansprüche 1 bis 5, dadurch gekennzeichnet, daß die Mineralfasern (7, 8) möglichst wellenförmig zwischen den beiden Plattenseiten (2, 3) verlaufen, und daß die mechanisch bearbeiteten Teilbereiche (9) in mindestens einigen der Wellentäler vorgesehen sind.

9. Dämmplatte nach Anspruch 8, dadurch gekennzeichnet, daß eine wellenförmige Vliesschicht (7) mit einer dichten Bindung der Mineralfasern in den übrigen Mineralfasern (8) eingebettet ist.

10. Dämmplatte nach einem der Anprüche 1 bis 9 dadurch gekennzeichnet, daß die Mineralfasern (11, 12) im wesentlichen unter einem Winkel von weniger als etwa 45° zu den Plattenseiten (2, 3) verlaufen.

11. Dämmplatte nach Anspruch 6 und 10, dadurch gekennzeichnet, daß die schrägverlaufenden Mineralfasern in einander abwechselnden ersten und zweiten Laminatschichten geordnet sind, daß die ersten Laminatschichten (11) eine dichte Bindung der Mineralfasern und die zweiten Laminatschichten (12) eine lockere Bindung der Mineralfasern aufweisen, und daß die zweiten Laminatschichten (12) mehrfach so dick wie die ersten (11) sind.

12. Verwendung einer Dämmplatte nach einem der Ansprüche 1 bis 11 als Mittelschale (30) eines dreischaligen Schornsteines (22), insbesondere Hausschornsteines, in Form einer über dem Umfang einstückigen oder in mehrere Segmente aufgeteilten Schale.


**Revendications**

1. Panneau isolant, composé de fibres minérales, qui sont reliées aux emplacements de croisement et de contact au moyen d'un liant durci en un treillis de fibres (6), des zones partielles (5, 9, 13, 15, 17, 20, 31) étant traitées mécaniquement de telle façon que le treillis soit au moins partiellement délié, caractérisé en ce que, en vue d'une application sur des corps (23) à surface courbe, comme des tubes, les zones partielles traitées mécaniquement (5, 9, 13, 15, 17, 20, 31) sont réalisées en partant d'une seule face de panneau (2), et en fonction du rayon de courbure de la surface courbe jusqu'à une profondeur dans l'épaisseur du panneau et avec des distances entre elles telles qu'elles permettent une flexibilité par articulation.

2. Panneau isolant selon la revendication 1, caractérisé en ce que les zones partielles traitées mécaniquement (31) pour envelopper des corps cylindriques (23) sont d'un tracé parallèle à l'axe de cylindre de ces derniers et sont réalisées sur la face de panneau tournée vers le corps (23).

3. Panneau isolant selon la revendication 2, caractérisé en ce que les zones partielles, vues en direction axiale, s'étendent sur une partie de la longueur du panneau et sont quelque peu décalées sur la périphérie l'une par rapport à l'autre en laissant des interstices.

4. Panneau isolant selon l'une des revendications 1 à 3, caractérisé en ce que les zones partielles présentent une coupe transversale rectangulaire (5, 15) ou trapézoïdale élargie vers l'extérieur (9, 13, 17, 20).

5. Panneau isolant selon l'une des revendications 1 à 4, caractérisé en ce qu'un support flexible, en particulier une feuille d'aluminium ou de matière plastique est collé sur la face non traitée mécaniquement (3).

6. Panneau isolant selon l'une des revendications 1 à 5, caractérisé en ce qu'il comporte au moins une couche de nappe primaire (32) présentant une liaison serrée des fibres minérales et au moins une couche de nappe secondaire (33) présentant une liaison lâche des fibres minérales, et en ce que les zones traitées mécaniquement (5) sont réalisées dans la couche de nappe secondaire (33).

7. Panneau isolant selon la revendication 6, caractérisé en ce que la couche de nappe primaire (32) est située vers l'une des faces de panneau (3) et en ce que la couche de nappe secondaire (33) est réalisée tournée vers l'autre face de panneau.

8. Panneau isolant selon l'une des revendications 1 à 5, caractérisé en ce que les fibres minérales (7, 8) présentent un tracé aussi ondulé que possible entre les deux faces de panneau (2, 3), et en ce que les zones partielles (9) traitées mécaniquement sont réalisées au moins dans quelques uns des creux des ondulations.

9. Panneau isolant selon la revendication 8, caractérisé en ce qu'une couche (7) ondulée à liaison serrée de fibres minérales est noyée dans les autres fibres minérales (8).

10. Panneau isolant selon l'une des revendications 1 à 9, caractérisé en ce que les fibres minérales (11, 12) font un angle inférieur à environ 45° par rapport aux faces de panneau (2, 3).

11. Panneau isolant selon l'une des revendications 6 et 10, caractérisé en ce que les fibres minérales de tracé oblique sont disposées en alternance en premières et deuxièmes couches stratifiées, en ce que les premières couches stratifiées (11) présentent une liaison serrée des fibres minérales et en ce que les deuxièmes couches stratifiées (12) présentent une liaison lâche des fibres minérales, et en ce que l'épaisseur des deuxièmes couches stratifiées (12) est égale à plusieurs fois celle des premières couches stratifiées (11).

12. Emploi d'un panneau isolant selon l'une des revendications 1 à 11 comme couche intermédiaire (30) d'une cheminée (22) à triple paroi, en particulier d'une cheminée domestique, sous forme d'une paroi d'un seul tenant ou divisée en plusieurs segments dans le sens de la périphérie.

**Claims**

1. Insulating board, consisting of mineral fibres, which at the intersection and contact points are connected by means of a hardened binding agent to form a fibre structure (6), partial regions (5, 9, 13, 15, 17, 20, 31) being machined so that the fibre structure is loosened at least partly, characterised in that for the purpose of application to members (23) having a curved surface, such as pipes, the machined partial regions (5, 9, 13, 15, 17, 20, 31) are provided starting form only one side of the board (2), depending on the radius of curvature of the curved surface, up to a depth of the board thickness and at intervals from each other such that articulated flexibility is provided.

2. Insulating board according to Claim 1, characterised in that for the purpose of encasing a cylindrical body (23), the machined partial regions (31) extend parallel to the axis of the cylinder and are provided on the side of the board facing the member (23).

3. Insulating board according to Claim 2, characterised in that seen in the axial direction, the partial regions extend over part of the length of the board and are staggered around the periphery.

4. Insulating board according to one of Claims 1 to 3, characterised in that the partial regions have a rectangular (5, 15) or outwardly enlarged trapezoidal (9, 13, 17, 20) cross-section.

5. Insulating board according to one of Claims 1 to 4, characterised in that a flexible support, in particular an aluminium or plastics foil is stuck to the non-machined side of the board (3).

6. Insulating board according to one of Claims 1 to 5, characterised in that at least one primary fleece layer (32) with close bonding of the mineral fibres and at least one secondary fleece layer (33) with loose bonding of the mineral fibres are provided and that the machined partial regions (5) are provided in the secondary fleece layer (33).

7. Insulating board according to Claim 6, characterised in that the primary fleece layer (32) is provided on one side of the board (3) and the secondary fleece layer (33) is provided on the other side of the board (2).

8. Insulating board according to one of Claims 1 to 5, characterised in that the mineral fibres (7, 8) undulate as much as possible between the two sides of the board (2, 3) and that the machined partial regions (9) are provided in at least some of the troughs of the undulations.

9. Insulating board according to Claim 8, characterised in that an undulating fleece layer (7) with a close bonding of the mineral fibres is embedded in the remaining mineral fibres (8).

10. Insulating board according to one of Claims 1 to 9, characterised in that the mineral fibres (11, 12) extend substantially at an angle of less than approximately 45° with respect to the sides of the boards (2, 3).

11. Insulating board according to Claims 6 and 10, characterised in that the obliquely extending mineral fibres are arranged in alternating first and second laminated layers, that the first laminated layers (11) have a close bonding of the mineral fibres and the second laminated layers (12) have a loose bonding of the mineral fibres and that the second laminated layers (12) are several times as thick as the first layers (11).

12. Use of an insulating board according to one of Claims 1 to 11 as the middle shell (30) of a three-shell chimney (22), in particular house chimney, in the form of a shell which is in one piece over the periphery or divided into several segments.

FIG.1

FIG.2

FIG.4

FIG.3

FIG.7

FIG.5

FIG.6